# EUROPÄISCHE PATENTANMELDUNG

(11) **EP 3 957 610 A1**
(43) Veröffentlichungstag der Anmeldung: **23.02.2022**
(21) Anmeldenummer: 20191323.3
(22) Anmeldetag: 17.08.2020
(51) Int. Cl.: C03B 19/10

(54) **ENTSTICKUNG VON ABGASEN BEI DER HERSTELLUNG EINES BLÄHGLASGRANULATS**

(71) Anmelder: DENNERT PORAVER GmbH, 92353 Postbauer-Heng (DE)
(72) Erfinder: Die Erfindernennung liegt noch nicht vor
(74) Vertreter: Müller Schupfner & Partner Patent- und Rechtsanwaltspartnerschaft mbB

(57) **Zusammenfassung**

Zur Reduzierung des Stickoxidgehalts von Abgasen bei der Herstellung eines Blähglasgranulats (B) wird Harnstoff in fester Form einem Brennprozess zugeführt, in dem ein Grünkorngranulat (G) zu dem Blähglasgranulat (B) expandiert wird.

## Beschreibung

Verfahren zur Reduzierung des Stickoxidgehalts von Abgasen bei der Herstellung eines Blähglasgranulats.

Der Begriff "Blähglasgranulat" bezeichnet üblicherweise ein Granulat aus multizellulären Partikeln mit einer schaumartigen Glasmatrix, die eine Vielzahl von gasgefüllten Hohlräumen umschließt. Solche Blähglasgranulate werden üblicherweise hergestellt, indem ein Glasmehl mit einem Bindemittel und einem Blähmittel sowie ggf. zusätzlichem Wasser zu einer wässrigen Binderschlempe (Slurry) vermischt werden, wobei diese Slurry anschließend, ggf. unter Zugabe von weiterem Glasmehl zu einem Grünkorngranulat granuliert wird. Das Grünkorngranulat wird anschließend einem Brennprozess zugeführt. In dem Brennprozess wird einerseits das Glasmehl teilweise aufgeschmolzen, so dass es sich mit dem Bindemittel zu der Glasmatrix verbindet. Andererseits verdampft während des Brennprozesses das Blähmittel sowie restliches, in den Grünkörnern verbliebenes Wasser, wodurch sich innerhalb der Glasmatrix eine Vielzahl von gasgefüllten Hohlräumen bildet. Das Grünkorngranulat wird somit zu dem Blähglasgranulat expandiert (geschäumt).

Ein solches Verfahren zur Herstellung von Blähglasgranulat ist aus DE 44 13 907 A1 bekannt. Danach wird als Bindemittel u.a. eine viskose Wasserglaslösung herangezogen. Zur Granulierung wird ein Granulierteller eingesetzt. Als Trennmittel wird insbesondere Natronsalpeter vorgeschlagen. Der Brennprozess wird in einem Drehrohrofen bei einer Temperatur zwischen 750 °C und 1000 °C durchgeführt.

Ein ähnliches Verfahren zur Herstellung von Blähglasgranulat ist aus DE 195 22 460 C2 bekannt. Danach wird die Slurry als sprühfähige Suspension hergestellt, zu deren Granulierung ein Zerstäubungstrocknungsverfahren (Sprühtrocknungsverfahren) eingesetzt wird.

Um bei der Durchführung des Brennprozesses in einem Drehrohrofen ein Verkleben der aufschmelzenden Grünkörner miteinander sowie mit der Ofenwand zu vermeiden, muss das Grünkorngranulat bei oder vor der Aufgabe in den Drehrohrofen mit einem Trennmittel vermischt werden. In WO 2006/056240 A1 wird vorgeschlagen, als Trennmittel Kaolin oder Metakaolin oder eine Mischung dieser Stoffe zu verwenden.

Aus DE 10 2016 208 141 A1, DE 10 2017 219 692 A1 und DE 10 2017 219 693 A1 sind andererseits Verfahren bekannt, die zwar hinsichtlich der verwendeten Ausgangsstoffe und der Verfahrensführung weitgehend den vorstehend beschriebenen Herstellungsverfahren gleichen, die aber - unterstützt durch die Verwendung besonderer Trennmittel - nicht zu herkömmlichen, multizellulär (schaumartig) expandierten Partikeln führen, sondern zu monozellulär expandierten Partikel, d.h. zu Mikro-Hohlglaskugeln mit einer Glaswand, die einen einzigen kugelförmigen Hohlraum umgibt. Solche monozellulär expandierte Partikel (Mikro-Hohlglaskugeln) fallen nicht unter den Begriff "Blähglasgranulat".

Den vorstehend genannten Verfahren ist gemeinsam, dass bei dem zur Expansion des Grünkorngranulats erforderlichen Brennprozess, ähnlich wie bei anderen Verbrennung- oder Kalzinierungsprozessen, Stickoxide (NOx) entstehen. Ursache für die Entstehung der Stickoxide ist hierbei zum einen die Beheizung des Drehrohrofens durch Verbrennung fossiler Brennstoffe. Zum anderen führt auch der z.B. gemäß DE 44 13 907 A1 als Trennmittel verwendete Natronsalpeter zur Entstehung von Stickoxiden während des Brennprozesses.

Ähnlich wie bei anderen Brenn- und Kalzinierungsprozessen, z.B. bei der Zementherstellung oder der Dekarbonisierung von Mineralien, gewinnt auch bei der Herstellung von Blähglasgranulat die Reduzierung der Stickoxidemission (Entstickung) aufgrund zunehmend verschärfter Emissionsschutzregelungen an Bedeutung.

Zur Entstickung von Verbrennungs-Abgasen wird häufig ein Verfahrensprinzip eingesetzt, dass als selektive nichtkatalytische Reduktion (Selective Non-Catalytic Reduction, SNCR) bezeichnet wird. Hierbei werden üblicherweise als Reduktionsmittel Ammoniak oder Harnstoff als wässrige Lösung bei einer Temperatur zwischen ca. 900 °C und 1000 °C direkt in den Feuerraum eingedüst. Das flüssige Reduktionsmittel regiert hier mit Stickstoffmonoxid zu Stickstoff und Wasserdampf (Wikipedia-Artikel "Selektive nicht-katalytische Reduktion, Version vom 13.05.2019, 13h34; heruntergeladen von https://de.wikipedia.org/wiki/Selektive_nichtkatalytische_Reduktion).

Es ist allerdings aus WO 97/37754 A1 bekannt, dass das Eindüsen von flüssigen Ammoniak- oder Harnstofflösungen bei Brenn- und Kalzinierungsprozessen in Drehrohröfen ineffektiv oder unpraktikabel ist. Ersatzweise wird hier vorgeschlagen, Harnstoff in Form eines Granulats (Prills) über die zu dem Brenner entgegengesetzte Stirnseite des Drehrohrofens in den Brennraum einzublasen.

In EP 2 587 149 A1 wird alternativ hierzu vorgeschlagen, Harnstoff in fester Form über das brennerseitige Stirnende eines Drehrohrofens in einen Bereich des Brennraums einzuschießen, in dem eine Temperatur zwischen 800 °C und 1100 °C herrscht.

Harnstoff in fester, insbesondere granularer Form wird zudem auch gemäß EP 1 779 919 A1, FR 2 900 062 A1, US 4 208 386 A und US 6 280 695 B1 als Reduktionsmittel für die selektive nicht-katalytische Reduktion von Stickoxiden verwendet.

Der Erfindung liegt die Aufgabe zugrunde, ein effektives Verfahren zur Reduzierung des Stickoxidgehalts von Abgasen bei der Herstellung eines Blähglasgranulats anzugeben.

Diese Aufgabe wird erfindungsgemäß gelöst durch die Merkmale des Anspruchs 1. Optionale Ausgestaltungsformen der Erfindung sind in den Unteransprüchen dargelegt.

Erfindungsgemäß wird zur Reduzierung des Stickoxidgehalts von Abgasen bei der Herstellung eines Blähglasgranulats, also eines Granulats aus schaumartig expandierten Glaspartikeln, Harnstoff in fester Form einem Brennprozess zugeführt, in dem ein Grünkorngranulat zu dem Blähglasgranulat expandiert wird.

Der Brennprozess wird vorzugsweise in einem Drehrohrofen durchgeführt. Der Harnstoff wird dabei vorzugsweise von einer Stirnseite des Drehrohrofens aus in einen Brennraum des Drehrohrofens eingeschossen oder eingeblasen, so dass sich der Harnstoff erst in dem Brennraum mit dem Grünkorngranulat vermischt. Als Drehrohrofen wird insbesondere ein mittels eines Brenners direkt beheizter Drehrohrofen eingesetzt, also ein Drehrohrofen, bei dem der Brennraum direkt mit der Brennerflamme beflammt wird. In diesem Fall wird der Harnstoff vorzugsweise von der brennerseitigen Stirnseite des Drehrohrofens aus in den Brennraum eingeschossen oder eingeblasen.

Alternativ hierzu wird der Harnstoff dem Grünkorngranulat vor der Aufgabe in den Drehrohrofen zugemischt. Diese Verfahrensvariante kommt insbesondere bevorzugt bei einem indirekt beheizten Drehrohrofen zum Einsatz, bei dem in dem Brennraum eine näherungsweise konstante, für die selektive nicht-katalytische Reduktion geeignete Temperatur herrscht. Auch bei einem direkt beheizten Drehrohrofen kann der Harnstoff gleichströmig mit dem Grünkorngranulat aufgegeben werden.

Der Harnstoff wird dem Brennprozess vorzugsweise in Form eines Granulats mit einer durchschnittlichen Korngröße zwischen 1 Millimeter und 3 Millimetern zugeführt, insbesondere in Form von sogenannten Prills, wie sie als Düngemittel in der Landwirtschaft eingesetzt werden.

Der Brennprozess wird in zweckmäßiger Ausführung des Verfahrens bei einer Temperatur zwischen 800 °C und 1100 °C, insbesondere zwischen 800 °C und 900 °C durchgeführt.

Das Grünkorngranulat wird vorzugsweise durch Vermischung von Glasmehl, Wasserglas (d.h. wässriger Wasserglaslösung), einem Blähmittel und optional zusätzlichem Wasser zu einer Slurry und anschließender Granulierung der Slurry hergestellt. Das Grünkorngranulat kann aber alternativ auch gemäß einer der anderen in DE 44 13 907 A1 und DE 195 22 460 C2 beschriebenen Methoden hergestellt werden. Die Granulierung erfolgt beispielsweise auf einem Granulierteller unter Zugabe von weiterem Glasmehl oder in einem Sprühturm. Als Blähmittel wird insbesondere Natronsalpeter eingesetzt.

Um zu verhindern, dass die Grünkörner des Grünkorngranulats während des Brennprozesses mit der Ofenwand oder - unter Bildung von Agglomeraten - miteinander verkleben, wird das Grünkorngranulat vorzugsweise mit zusammen mit einem Trennmittel dem Ofen aufgegeben. Als Trennmittel werden hierbei insbesondere feingemahlenes Kaolin und/oder Metakaolin eingesetzt. In einer weiteren zweckmäßigen Verfahrensvariante wird der Harnstoff vor der Aufgabe in den Drehrohrofen dem Trennmittel zugemischt. Die Mischung aus Trennmittel und Harnstoff wird dann in dem Drehrohrofen mit dem Grünkorngranulat vermischt.

In einer geeigneten Dimensionierung wird der Harnstoff dem Brennprozess mit einem Mengenanteil aufgegeben, der zwischen 0,1 Gew.-% und 0,5 Gew.-% beträgt. Die vorstehenden Prozentangaben beziehen sich dabei auf die Summe der Mengenanteile an Grünkorngranulat, Trennmittel und Harnstoff. Der angegebene Mengenanteil an Harnstoff summiert sich also mit korrespondierenden Mengenanteilen Grünkorngranulat und ggf. Trennmittel auf 100 Gew.-%.

Gegenstand der Erfindung ist auch ein Verfahren zur Herstellung eines Blähglasgranulats. Im Zuge dieses Herstellungsverfahrens werden Glasmehl, Wasserglas und ein Blähmittel, insbesondere Natronsalpeter, zu einer Slurry vermischt. Durch Granulierung der Slurry, insbesondere auf einem Granulierteller unter Zugabe von weiterem Glasmehl oder in einem Sprühturm, wird ein Grünkorngranulat hergestellt. Das Grünkorngranulat wird zusammen mit einem Trennmittel, insbesondere feingemahlenem Kaolin und/oder Metakaolin, in einen Ofen, insbesondere einen Drehrohrofen, aufgegeben und dort in einem Brennprozesses zu dem Blähglasgranulat expandiert. Zur Entstickung des während des Brennprozesses entstehenden Abgases wird dem Brennprozess Harnstoff in fester Form, insbesondere in Form eines Granulats, zugeführt. Varianten und optionale Ausgestaltungsformen des Herstellungsverfahrens ergeben sich sinngemäß aus den vorstehenden Ausführungen.

Ein weiterer Gegenstand der Erfindung ist eine Anlage zur Herstellung eines - Blähglasgranulats. Die Anlage umfasst einen Mischer zur Vermischung von Glasmehl, Wasserglas und einem Blähmittel zu einer Slurry. Die Anlage umfasst weiterhin eine Granuliervorrichtung, insbesondere einen Granulierteller oder einen Sprühturm, die dazu eingerichtet ist, durch Granulierung der Slurry, optional unter Zugabe von weiterem Glasmehl, ein Grünkorngranulat herzustellen. Außerdem umfasst die Anlage einen Ofen, insbesondere einen Drehrohrofen, dem das Grünkorngranulat zusammen mit einem Trennmittel zugeführt ist, um in dem Ofen in einem Brennprozess zu dem Blähglasgranulat expandiert zu werden. Die Anlage umfasst schließlich Mittel zur Lagerung von Harnstoff in fester Form, insbesondere in Form eines Granulats, sowie Mittel zur Zuführung des Harnstoffs zu dem Brennprozess, um das während des Brennprozesses entstehende Abgases zu entsticken. Varianten und optionale Ausgestaltungsformen der Anlage ergeben sich wiederum sinngemäß aus den vorstehenden Ausführungen.

Nachstehend werden Ausführungsbeispiele der Erfindung anhand einer Zeichnung näher erläutert. Darin zeigen:

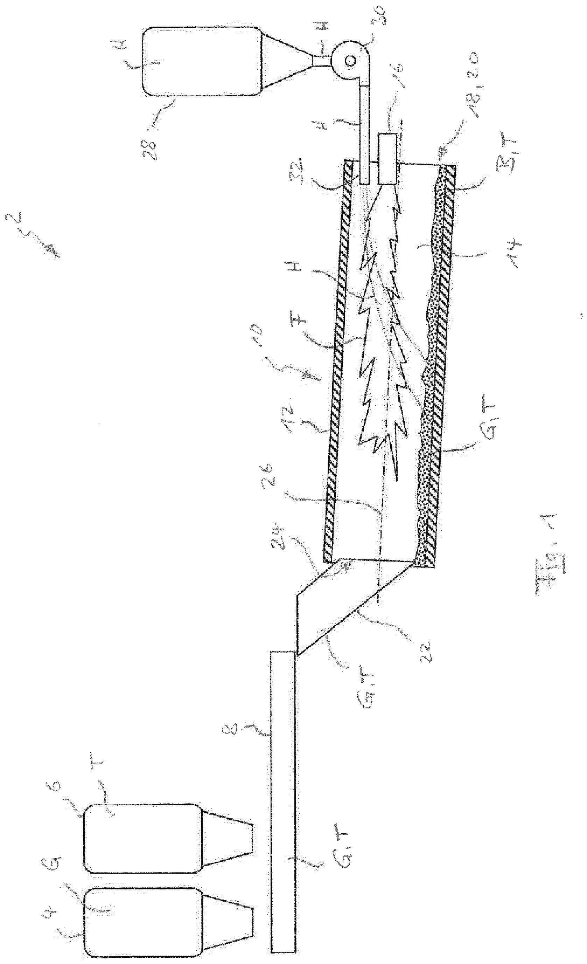

- Fig. 1: in grob schematisch vereinfachter Darstellung einen Teil einer Anlage zur Herstellung von (multizellulär expandiertem) Blähglasgranulat, mit einem direkt beheizten Drehrohrofen, mit einer eine ersten Fördereinrichtung, über die dem Drehrohrofen ein Grünkorngranulat sowie ein Trennmittel zugeführt sind, sowie mit einer zweiten Fördereinrichtung zum Einblasen eines Harnstoffgranulats in einen Brennraum des Drehrohrofens, und

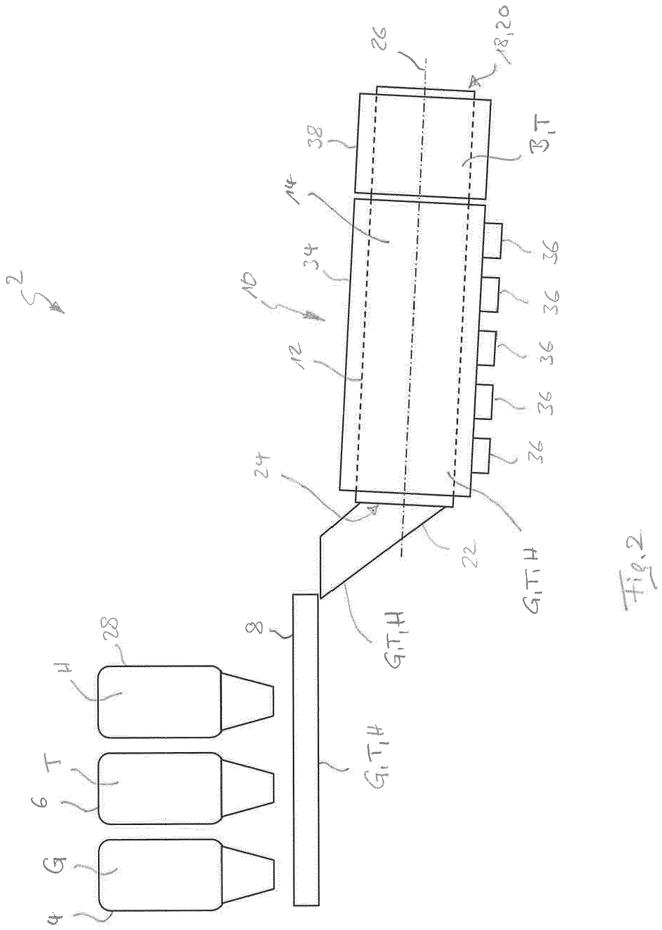

- Fig. 2: in Darstellung gemäß Fig. 1 eine Variante der Anlage mit einem indirekt beheizten Drehrohr, dem über die erste Fördereinrichtung zusammen mit dem Grünkorngranulat und dem Trennmittel auch das Harnstoffgranulat zugeführt ist.

Einander entsprechende Teile und Größen sind in allen Figuren stets mit gleichen Bezugszeichen versehen.

In Fig. 1 ist ein Teil einer Anlage 2 zur Herstellung eines Blähglasgranulats B dargestellt.

Die Anlage 2 umfasst einen ersten Silo 4 als Vorlagebehälter für ein Grünkorngranulat G, das im Zuge eines nachstehend näher beschriebenen Brennprozesses zu dem Blähglasgranulat B expandiert wird.

Die Herstellung des Grünkorngranulats G erfolgt in einem nicht näher dargestellten Teil der Anlage 2, z.B. nach dem in DE 44 13 907 A1 beschriebenen Verfahren.

Die Anlage 2 umfasst hierzu insbesondere eine Mühle, z.B. in Form einer Kugelmühle, in der Glasstücke, insbesondere Altglas, zu Glasmehl gemahlen werden.

Das in einem Vorlagebehälter zwischengelagerte Glasmehl wird zusammen mit viskosem Wasserglas, Natronsalpeter als Blähmittel, viskosem Natron-Wasserglas als Binder und optional zusätzlichem Wasser in einen Rührwerk-Behälter der Anlage 2 eindosiert, in dem diese Ausgangsstoffe zu einer Binder-Schlempe (Slurry) vermischt werden.

Aus der Slurry wird anschließend auf einem Granulierteller der Anlage 2 unter Zugabe von weiterem Glasmehl das Grünkorngranulat gebildet, das nach einer Vortrocknung sowie optional einer Fraktionierung in dem Silo 4 eingelagert wird.

Zusätzlich zu dem Silo 4 umfasst die Anlage 2 einen weiteren Silo 6 als Vorlagebehälter für pulverförmiges Trennmittel T, insbesondere feingemahlenes Kaolin oder Metakaolin. Weiterhin umfasst die Anlage 2 gemäß Fig. 1 eine erste Fördereinrichtung 8, die beispielsweise eine Mischrinne oder einen Schneckenförderer umfasst, sowie einen Drehrohrofen 10. Bei dem Drehrohrofen 10 handelt es sich in dem Beispiel gemäß Fig. 1 um einen direkt beheizten Drehrohrofen. Hierbei wird ein von einer rohrförmigen Ofenwand (nachfolgend Drehrohr 12) umgebener Brennraum 14 des Drehrohrofens 10 mittels eines Brenners 16 direkt beflammt. Der Brenner 16 ist an der einem Auslass 18 des Drehrohrofens 10 zugewandten Stirnseite 20 des Brennraums 14 angeordnet.

Im Betrieb der Anlage 2 werden aus den Silos 4 und 6 das Grünkorngranulat G und das Trennmittel T in die Fördereinrichtung 8 eindosiert und dort miteinander vermischt. Die Mischung aus Grünkorngranulat G und Trennmittel T gelangt von der Fördereinrichtung 8 über eine Aufgaberutsche 22 an der zu dem Auslass 18 entgegengesetzten Stirnseite 24 in den Brennraum 14.

Zur Durchführung des Brennprozesses wird durch Beflammung mittels des Brenners 16 in dem Brennraum 14 eine Temperatur zwischen 800 °C und 900 °C erzeugt. Tatsächlich bildet sich innerhalb des Brennraums 14 typischerweise ein Temperaturprofil aus, gemäß dem brennerseitig (d.h. in der Nähe des Auslasses 18) eine Temperatur von typischerweise zwischen 840 °C und 875 °C herrscht, während die Temperatur an der gegenüberliegenden Seite des Brennraums 14 (also in der Nähe der aufgabeseitigen Stirnseite 24) typischerweise bei ca. 450 °C bis 500 °C liegt.

Das geringfügig zum Auslass 18 hin geneigt montierte Drehrohr 12 wird im Betrieb der Anlage 2 um eine Drehachse 26 rotiert. Die in den Brennraum 14 eingebrachte Mischung aus Grünkorngranulat G und Trennmittel T wird hierdurch langsam in Richtung des Auslasses 18 gefördert. Während des Aufenthalts in dem Brennraum 14, die typischerweise zwischen 4 und 7 Minuten beträgt, wird das Grünkorngranulat G infolge der Verdampfung des Blähmittels zu dem Blähglasgranulat B expandiert.

Das über den Auslass 18 aus dem Drehrohr 12 ausgeworfene Blähglasgranulat B wird abgekühlt, durch Sieben von dem Trennmittel T getrennt, optional erneut in Korngrößenfraktionen fraktioniert und gelagert.

Das bei dem Brennprozess entstehende Abgas verlässt das Drehrohr 12 über die von dem Brenner 16 abgewandte Stirnseite 24.

Um den Stickoxidgehalt dieses Abgases zu reduzieren, umfasst die Anlage 2 einen weiteren Silo 28 als Vorlagebehälter für ein Harnstoffgranulat H. Das Harnstoffgranulat H liegt insbesondere in Form von sogenannten Prills mit einer durchschnittlichen Korngröße zwischen 1 Millimeter und 3 Millimetern vor, die beispielsweise von der Firma Oqema GmbH, Mönchengladbach, DE unter der Bezeichnung "Harnstoff technisch" erhältlich sind.

Zur Einbringung des Harnstoffgranulats H in den Brennraum 14 umfasst die Anlage 2 eine zweite Fördereinrichtung 30. In dem Beispiel gemäß Fig. 1 ist die Fördereinrichtung 30 durch einen pneumatischen Förderer gebildet, der - wie in WO 97/37754 A1 vorgeschlagen wird - beispielsweise nach Art eines Sandstrahlers ausgebildet ist.

Das Harnstoffgranulat H wird über eine Austrittsdüse 32 der Fördereinrichtung 30 in den Brennraum 14 eingeblasen. Die Austrittsdüse 32 ist vorzugsweise an der auslassseitigen Stirnseite 20 des Brennraums 14 (und somit in der Nähe des Brenners 16) angeordnet. Das Harnstoffgranulat H wird somit insbesondere durch die Flamme F des Brenners 16 eingeblasen. Der Blasdruck der Fördereinrichtung 30 und somit die Geschwindigkeit der Harnstoffpartikel beim Verlassen der Austrittsdüse 32 sind insbesondere derart dimensioniert, dass das in den Brennraum 14 eingeblasene Harnstoffgranulat H etwa mittig zwischen den Stirnseiten 20 und 24 auf das Drehrohr 12 und die hierin geförderte Mischung aus Grünkorngranulat G und Trennmittel T auftrifft. Bei einer typischen Länge des Drehrohres 12 von etwa 8 m wird das Harnstoffgranulat H also etwa in einem Abstand von 4 m zum Auslass 18 des Drehrohrs 12 mit dem Grünkorngranulat G gemischt. Unter den hier herrschenden Temperaturen von ca. 800 °C bis 820 °C reagiert der verdampfende Harnstoff mit entstehendem Stickstoffmonoxid nach dem Prinzip der selektiven nichtkatalytischen Reduktion (SNCR) zu Stickstoff und Wasserdampf. Hierdurch wird eine effektive Reduzierung des Stickoxidgehalts in dem das Drehrohr 12 verlassenden Abgas erzielt.

Um zu vermeiden, dass das Harnstoffgranulat H bereits vor Verlassen der Fördereinrichtung 30 schmilzt und dabei ggf. die Austrittsdüse 32 verstopft, ist die Austrittsdüse 32 optional thermisch isoliert und/oder gekühlt.

In Fig. 2 ist eine alternative Ausführung der Anlage 2 dargestellt. Die Anlage 2 gemäß Fig. 2 gleicht bis auf die nachfolgend beschriebenen Unterschiede dem vorstehend beschriebenen Ausführungsbeispiel. Ein Unterschied besteht allerdings darin, dass bei der Anlage 2 aus Fig. 2 der Drehrohrofen 10 indirekt beheizt ist. In einem an die aufgabeseitige Stirnseite 24 anschließenden Bereich (der auch als Schäumrohr bezeichnet ist), ist das Drehrohr 12 des Drehrohrofens 10 dabei von einem Heizmantel 34 umgeben, der mit einer Anzahl von Brennern 36 bestückt ist. Durch die Brenner 36 wird das Drehrohr 12 von außen erhitzt.

In dem an das Schäumrohr auslassseitig anschließenden Bereich des Drehrohres 12 (der auch als Kühlrohr bezeichnet ist), ist das Drehrohr 12 unbeheizt. Optional ist das Kühlrohr von einem Kühlmantel 38 umgeben, in dem das Drehrohr 12 - z.B. durch eine Wasserkühlung, von außen aktiv gekühlt wird.

Im Betrieb der Anlage 2 wird in dem Schäumrohr (also dem beheizten Bereich des Drehrohrs 12) zur Durchführung des Brennprozesses eine näherungsweise konstante Temperatur von ca. 800 °C bis 820 °C erzeugt. Da somit die Temperatur in dem Brennraum 14 über die gesamte Länge des Schäumrohres sowohl für die Entstehung der Stickoxide als auch für deren Reduktion mittels SNCR günstig ist, wird das Harnstoffgranulat H hier nicht - wie im Beispiel gemäß Fig. 1 - in die Mitte des Brennraums 14 eingeblasen. Vielmehr wird das Harnstoffgranulat H hier bereits mit der Aufgabe des Grünkorngranulats G und des Trennmittels T in den Brennraum 14 eingebracht. Zu diesem Zweck ist der zur Lagerung des Harnstoffgranulats H vorgesehene Silo 28 im Beispiel gemäß Fig. 2 derart angeordnet, dass er - zusammen mit den Silos 4 und 6 - die Fördereinrichtung 8 beschickt. Die zweite Fördereinrichtung 30 ist bei der Anlage 2 gemäß Fig. 2 nicht vorhanden.

Durch die Fördereinrichtung 8 wird somit im Beispiel gemäß Fig. 2 das Harnstoffgranulat H mit dem Grünkorngranulat G und dem Trennmittel T vermischt. Die Mischung aus Grünkorngranulat G, Trennmittel T und Harnstoffgranulat H wird analog zu dem Beispiel gemäß Fig. 1 über die Aufgaberutsche 22 in den Brennraum 14 eingebracht.

In beiden Ausführungsbeispielen ist die Menge des in den Brennraum 14 eingebrachten Harnstoffgranulats H insbesondere derart dimensioniert, dass der Harnstoffanteil, gemessen an dem Gewicht des insgesamt in den Brennraum 14 eingebrachten Materials (d.h. des Grünkorngranulats G, des Trennmittels T und des Harnstoffgranulats H) zwischen 0,1 Gew.-% und 0,5 Gew.-% liegt. Vorzugsweise werden
- 84 Gew.-% bis 89 Gew.-% an Grünkorngranulat G,
- 11 Gew.-% bis 15 Gew.-% an Trennmittel T und
- 0,19 Gew.-% bis 0,26 Gew.-% an Harnstoffgranulat H

in die Brennkammer 14 eingebracht, wobei sich die Mengen an Grünkorngranulat G, Trennmittel T und Harnstoffgranulat H stets zu 100 Gew.-% ergänzen. Bei den kontinuierlichen Herstellungsverfahren aus Fig. 1 und Fig. 2 sind diese Mengenangaben als Gewicht des jeweils eingesetzten Stoffes pro Zeiteinheit zu verstehen.

In weiteren Varianten der Anlage 2 gemäß Fig. 1 oder 2 wird zur Herstellung des Grünkorngranulats G anstelle des vorstehend beschriebenen Granuliertellers ein Sprühturm eingesetzt. Die Herstellung des Grünkorngranulats G erfolgt dabei insbesondere nach dem in DE 195 22 460 C2 beschriebenen Verfahren.

Die Erfindung wird anhand der vorstehend beschriebenen Ausführungsbeispiele besonders deutlich, ist auf diese aber nicht beschränkt. Vielmehr können weitere Ausführungsformen der Erfindung aus den Ansprüchen und der vorstehenden Beschreibung abgeleitet werden.

### Bezugszeichenliste

- 2: Anlage
- 4: Silo
- 6: Silo
- 8: (erste) Fördereinrichtung
- 10: Drehrohrofen
- 12: Drehrohr
- 14: Brennraum
- 16: Brenner
- 18: Auslass
- 20: Stirnseite
- 22: Aufgaberutsche
- 24: Stirnseite
- 26: Drehachse
- 28: Silo
- 30: (zweite) Fördereinrichtung
- 32: Austrittsdüse
- 34: Heizmantel
- 36: Brenner
- 38: Kühlmantel

- B: Blähglasgranulat
- G: Grünkorngranulat
- T: Trennmittel
- H: Harnstoffgranulat
- F: Flamme

## Patentansprüche

1. Verfahren zur Reduzierung des Stickoxidgehalts von Abgasen bei der Herstellung eines Blähglasgranulats (B), wobei Harnstoff in fester Form einem Brennprozess zugeführt wird, in dem ein Grünkorngranulat (G) zu dem Blähglasgranulat (B) expandiert wird.

2. Verfahren nach Anspruch 1,
wobei das Grünkorngranulat (G) dem Brennprozess zusammen mit einem Trennmittel (T), insbesondere Kaolin und/oder Metakaolin, zugegeben wird.

3. Verfahren nach Anspruch 1 oder 2,
wobei der Brennprozess in einem Drehrohrofen (10) durchgeführt wird, und wobei der Harnstoff von einer Stirnseite (20) des Drehrohrofens (10) aus in einen Brennraum (14) des Drehrohrofens (10) eingeschossen oder eingeblasen wird, so dass sich der Harnstoff in dem Brennraum (14) mit dem Grünkorngranulat (G) vermischt.

4. Verfahren nach Anspruch 3,
wobei als Drehrohrofen (10) ein mittels eines Brenners (16) direkt beheizter Drehrohrofen eingesetzt wird, und wobei der Harnstoff von der brennerseitigen Stirnseite (20) des Drehrohrofens (10) aus in den Brennraum (14) eingeschossen oder eingeblasen wird.

5. Verfahren nach Anspruch 1 oder 2,
wobei der Brennprozess in einem Drehrohrofen (10) durchgeführt wird, und wobei der Harnstoff dem Grünkorngranulat (G) vor der Aufgabe in den Drehrohrofen (10) zugemischt wird.

6. Verfahren nach Anspruch 2,
wobei der Brennprozess in einem Drehrohrofen (10) durchgeführt wird, und wobei der Harnstoff dem Trennmittel (T) vor der Aufgabe in den Drehrohrofen (10) zugemischt wird, und wobei die Mischung aus Trennmittel (T) und Harnstoff in einem Brennraum (14) des Drehrohrofens (10) mit dem Grünkorngranulat (G) vermischt wird.

7. Verfahren nach einem der Ansprüche 1 bis 6,
wobei der Harnstoff dem Brennprozess in Form eines Granulats (H) mit einer durchschnittlichen Korngröße zwischen 1 Millimeter und 3 Millimetern zugeführt wird.

8. Verfahren nach einem der Ansprüche 1 bis 7,
wobei der Brennprozess bei einer Temperatur zwischen 800 °C und 1100 °C, insbesondere zwischen 800 °C und 900 °C durchgeführt wird.

9. Verfahren nach einem der Ansprüche 1 bis 8,
wobei das Grünkorngranulat (G) durch Vermischung von Glasmehl, Wasserglas, einem Blähmittel sowie optional zusätzlichem Wasser zu einer Slurry und anschließender Granulierung der Slurry, insbesondere auf einem Granulierteller unter Zugabe von weiterem Glasmehl oder in einem Sprühturm, hergestellt ist.

10. Verfahren nach Anspruch 9,
wobei der Harnstoff dem Brennprozess mit einem Mengenanteil von 0,1 Gew.-% bis 0,5 Gew.-%, gemessen an der Summe der Mengenanteile an Grünkorngranulat (G), Trennmittel (T) und Harnstoff, zugegeben wird.
